# EUROPEAN PATENT APPLICATION

(11) **EP 4 631 657 A1**
(43) Date of publication of application: **15.10.2025**
(21) Application number: 24808843.7
(22) Date of filing: 26.02.2024
(51) Int. Cl.: B23C 5/28, B23C 5/20

(54) **CUTTING INSERT AND ROTARY CUTTING TOOL**

(71) Applicant: Sumitomo Electric Hardmetal Corp., Itami-shi, Hyogo 664-0016 (JP); Sumitomo Electric Industries, Ltd., Osaka 541-0041 (JP)
(72) Inventor: MATSUBARA, Kouki, Hyogo 6640016 (JP); RIKISO, Yuki, Osaka 5410041 (JP); MURAOKA, Takuto, Hyogo 6640016 (JP)
(74) Representative: Boult Wade Tennant LLP
(86) International application number: PCT/JP2024/006788
(87) International publication number: WO 2025/181857

(57) **Abstract**

A cutting insert has a base member and a cutting edge member. The cutting edge member has a rake face and a flank face contiguous to the rake face. A ridgeline between the rake face and the flank face forms a cutting edge. The base member is provided with a flow path through which a fluid passes. The base member has a front end surface on which the cutting edge member is disposed, a rear end surface located opposite to the front end surface, a first side surface located between the front end surface and the rear end surface and provided with an inlet of the flow path, and a second side surface located opposite to the first side surface and provided with an outlet of the flow path. The rear end surface has a flat shape. The first side surface has a flat shape. An imaginary plane along the rear end surface and an imaginary plane along the first side surface are perpendicular to each other. A vector parallel to a direction in which the fluid flows out from the outlet and which is tangential to the outlet of the flow path has a component of a first direction perpendicular to the rear end surface and extending from the front end surface toward the rear end surface, the component being positive.

## Description

### TECHNICAL FIELD

The present disclosure relates to a cutting insert and a rotary cutting tool.

### BACKGROUND ART

WO 2019/220528 (PTL 1) discloses a cutting insert provided with a coolant supply hole.

### CITATION LIST

### PATENT LITERATURE

PTL 1: WO 2019/220528

### SUMMARY OF INVENTION

A cutting insert according to the present disclosure is a cutting insert for a rotary cutting tool, and includes a base member and a cutting edge member attached to the base member. The cutting edge member has a rake face and a flank face contiguous to the rake face. A ridgeline between the rake face and the flank face forms a cutting edge. The base member is provided with a flow path through which a fluid passes. The base member has a front end surface on which the cutting edge member is disposed, a rear end surface located opposite to the front end surface, a first side surface located between the front end surface and the rear end surface and provided with an inlet of the flow path, and a second side surface located opposite to the first side surface and provided with an outlet of the flow path. The rear end surface has a flat shape. The first side surface has a flat shape. An imaginary plane along the rear end surface and an imaginary plane along the first side surface are perpendicular to each other. A vector parallel to a direction in which the fluid flows out from the outlet and which is tangential to the outlet of the flow path has a component of a first direction perpendicular to the rear end surface and extending from the front end surface toward the rear end surface, the component being positive.

### BRIEF DESCRIPTION OF DRAWINGS

Fig. 1 is a first schematic perspective view showing a configuration of a cutting insert according to a first embodiment.
Fig. 2 is a second schematic perspective view showing the configuration of the cutting insert according to the first embodiment.
Fig. 3 is a schematic cross sectional view showing the configuration of the cutting insert according to the first embodiment.
Fig. 4 is a schematic front view showing a shape of an outlet of a flow path.
Fig. 5 is a schematic cross sectional view showing a configuration of a cutting insert according to a second embodiment.
Fig. 6 is a schematic perspective view showing a configuration of a cutting insert according to a third embodiment.
Fig. 7 is a schematic perspective view showing a configuration of a cutting insert according to a fourth embodiment.
Fig. 8 is a schematic cross sectional view showing the configuration of the cutting insert according to the fourth embodiment.
Fig. 9 is a schematic perspective view showing a configuration of a rotary cutting tool according to the present embodiment.
Fig. 10 is a schematic front view showing the configuration of the rotary cutting tool according to the present embodiment.
Fig. 11 is a schematic cross sectional view along a line XI-XI of Fig. 10.
Fig. 12 is a schematic cross sectional view along a line XII-XII of Fig. 10.
Fig. 13 is a schematic cross sectional view showing a state in which a workpiece is cut using the rotary cutting tool.

### DETAILED DESCRIPTION

### [Description of Embodiments]

First, embodiments of the present disclosure (also referred to as the present embodiment) will be listed and described.
(1) A cutting insert according to the present disclosure is a cutting insert for a rotary cutting tool, and includes a base member and a cutting edge member attached to the base member. The cutting edge member has a rake face and a flank face contiguous to the rake face. A ridgeline between the rake face and the flank face forms a cutting edge. The base member is provided with a flow path through which a fluid passes. The base member has a front end surface on which the cutting edge member is disposed, a rear end surface located opposite to the front end surface, a first side surface located between the front end surface and the rear end surface and provided with an inlet of the flow path, and a second side surface located opposite to the first side surface and provided with an outlet of the flow path. The rear end surface has a flat shape. The first side surface has a flat shape. An imaginary plane along the rear end surface and an imaginary plane along the first side surface are perpendicular to each other. A vector parallel to a direction in which the fluid flows out from the outlet and which is tangential to the outlet of the flow path has a component of a first direction perpendicular to the rear end surface and extending from the front end surface toward the rear end surface, the component being positive. Thus, the fluid can be discharged rearward with respect to the cutting edge. As a result, it is possible to reduce entry of a chip into a recess provided in a workpiece.
(2) In the cutting insert according to (1), the flow path may have a first flow path portion which forms the inlet and in which the fluid is accumulated, and a second flow path portion that forms an outlet and that is contiguous to the first flow path portion. This leads to a reduced weight of the cutting insert. As a result, the rotary cutting tool can be rotated at a high speed.
(3) In the cutting insert according to (1) or (2), when viewed in a front view of the outlet, a width of the outlet in a direction perpendicular to the rake face may be larger than a width of the outlet in a direction parallel to the rake face. Thus, a discharge amount of the fluid can be increased. As a result, it is possible to further reduce entry of a chip into the recess provided in the workpiece.
(4) In the cutting insert according to any one of (1) to (3), in a cross section parallel to the first direction and intersecting each of the inlet and the outlet, an angle of 0° or more and 90° or less may be formed by a direction in which the fluid flows into the inlet and which is tangential to the inlet of the flow path and a second direction opposite to the first direction, and an angle of more than 90° and 180° or less may be formed by a direction in which the fluid flows out from the outlet and which is tangential to the outlet of the flow path and the second direction. Thus, the fluid can be discharged from the outlet of the flow path in a region close to the cutting edge. As a result, it is possible to further reduce entry of a chip into the recess provided in the workpiece.
(5) In the cutting insert according to (2), when viewed in a front view of the outlet, a width of the outlet in a direction perpendicular to the rake face may be larger than a width of the outlet in a direction parallel to the rake face. In a cross section parallel to the first direction and intersecting each of the inlet and the outlet, an angle of 0° or more and 90° or less may be formed by a direction in which the fluid flows into the inlet and which is tangential to the inlet of the flow path and a second direction opposite to the first direction, and an angle of more than 90° and 180° or less may be formed by a direction in which the fluid flows out from the outlet and which is tangential to the outlet of the flow path and the second direction. Thus, a discharge amount of the fluid can be increased. Further, the fluid can be discharged from the outlet of the flow path in a region close to the cutting edge. As a result, it is possible to further reduce entry of a chip into the recess provided in the workpiece.
(6) In the cutting insert according to any one of (1) to (5), the second side surface may be provided with a protruding wall portion. The outlet may be opened in a side surface of the protruding wall portion. The protruding wall portion can prevent a chip from being moved frontward with respect to the cutting edge. As a result, it is possible to further reduce entry of a chip into the recess provided in the workpiece.
(7) In the cutting insert according to any one of (1) to (6), the number of the outlets may be two or more.
(8) A rotary cutting tool according to the present disclosure is rotatable about an axis and includes a cutting insert and a main body portion to which the cutting insert is attached. The cutting insert includes a base member and a cutting edge member attached to the base member. The cutting edge member has a rake face and a flank face contiguous to the rake face. A ridgeline between the rake face and the flank face forms a cutting edge. The base member is provided with a flow path through which a fluid passes. The base member has a front end surface on which the cutting edge member is disposed, a rear end surface located opposite to the front end surface, a first side surface located between the front end surface and the rear end surface and provided with an inlet of the flow path, and a second side surface located opposite to the first side surface and provided with an outlet of the flow path. The main body portion has a first surface to face a workpiece and a second surface located opposite to the first surface. In a cross section parallel to the axis and intersecting each of the inlet and the outlet, an angle of more than 90° and 180° or less is formed by a direction in which the fluid flows out from the outlet and which is tangential to the outlet of the flow path and an axis frontward direction parallel to the axis and extending from the second surface toward the first surface. Thus, the fluid can be discharged in the direction opposite to the direction in which the workpiece exists. As a result, it is possible to reduce entry of a chip into the recess provided in the workpiece.
(9) In the rotary cutting tool according to (8), the main body portion may be provided with a third flow path portion through which the fluid passes. The third flow path portion may have a main body outlet contiguous to the flow path and a main body inlet located opposite to the main body outlet. In a cross section parallel to the axis and intersecting each of the main body inlet and the main body outlet, an angle of more than 0° and 90° or less may be formed by a direction from the main body inlet toward the main body outlet and the axis frontward direction. Thus, the fluid can be discharged from the outlet of the flow path in a region close to the cutting edge. As a result, it is possible to further reduce entry of a chip into the recess provided in the workpiece.

Specific examples of the embodiments of the present disclosure will be described below with reference to figures. In the below-described figures, the same or corresponding portions are denoted by the same reference characters and will not be described repeatedly.

### (First Embodiment)

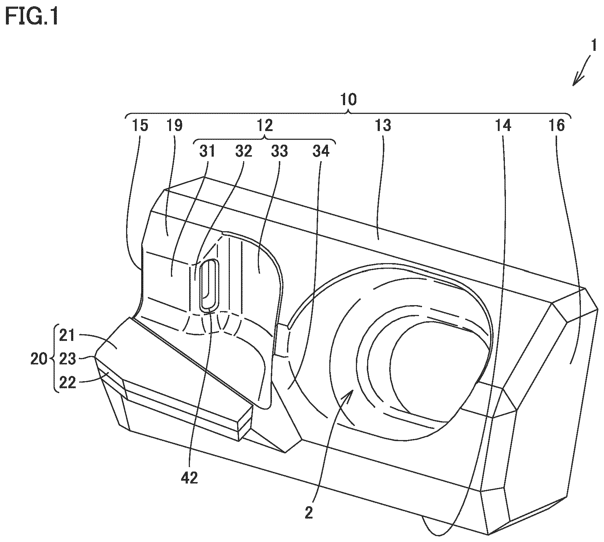

Fig. 1 is a first schematic perspective view showing a configuration of a cutting insert according to a first embodiment. As shown in Fig. 1, a cutting insert 1 according to the first embodiment is a cutting insert for a rotary cutting tool, and includes a base member 10 and a cutting edge member 20. Cutting edge member 20 is attached to base member 10. Cutting edge member 20 has a rake face 21 and a flank face 22. Flank face 22 is contiguous to rake face 21. A ridgeline between rake face 21 and flank face 22 forms a cutting edge 23.

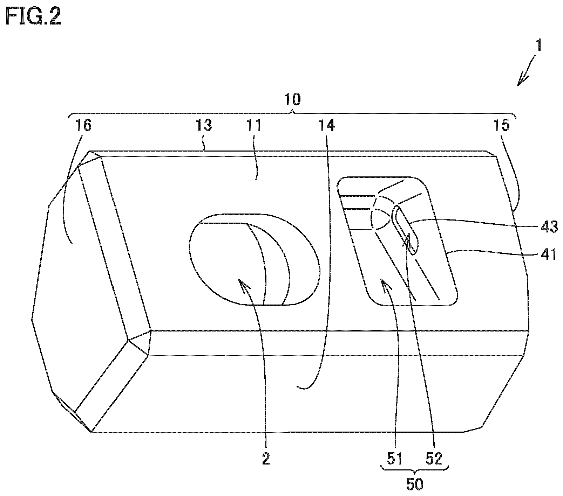

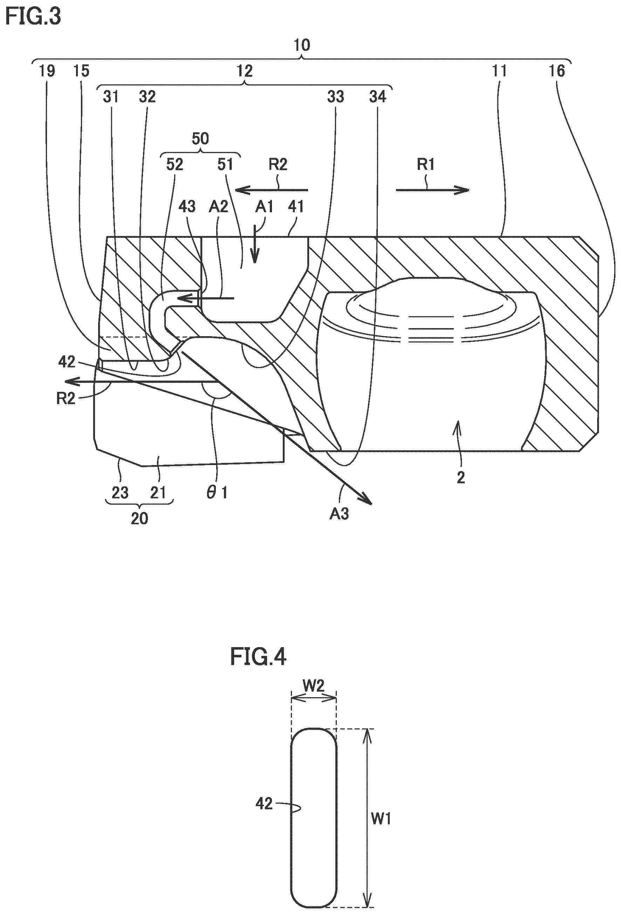

Fig. 2 is a second schematic perspective view showing the configuration of cutting insert 1 according to the first embodiment. As shown in Figs. 1 and 2, base member 10 has a front end surface 15, a rear end surface 16, a first side surface 11, a second side surface 12, a third side surface 13, and a fourth side surface 14. Front end surface 15 is a surface to face a workpiece. Rear end surface 16 is located opposite to front end surface 15. Rear end surface 16 has a flat shape. A direction from front end surface 15 toward rear end surface 16 is defined as a first direction R1 (see Fig. 3). First direction R1 is perpendicular to rear end surface 16. A direction opposite to first direction R1 is defined as a second direction R2 (see Fig. 3). Cutting edge member 20 is disposed on front end surface 15. A portion of cutting edge 23 formed by cutting edge member 20 is located in second direction R2 with respect to front end surface 15.

Base member 10 is provided with a flow path 50. A fluid passes through flow path 50. The fluid is, for example, a coolant, but is not limited to the coolant. The fluid may be a liquid, a gas, or a mist.

Base member 10 has an inlet (hereinafter, also referred to as a first opening 41) of flow path 50 and an outlet (hereinafter, also referred to as a second opening 42) of flow path 50. First opening 41 is provided in first side surface 11. First side surface 11 is located between front end surface 15 and rear end surface 16. First side surface 11 has a flat shape. An imaginary plane along rear end surface 16 and an imaginary plane along first side surface 11 are perpendicular to each other. Second opening 42 is provided in second side surface 12. Second side surface 12 is located opposite to first side surface 11. Second side surface 12 is located between front end surface 15 and rear end surface 16. The fluid enters flow path 50 through first opening 41. The fluid exits flow path 50 through second opening 42.

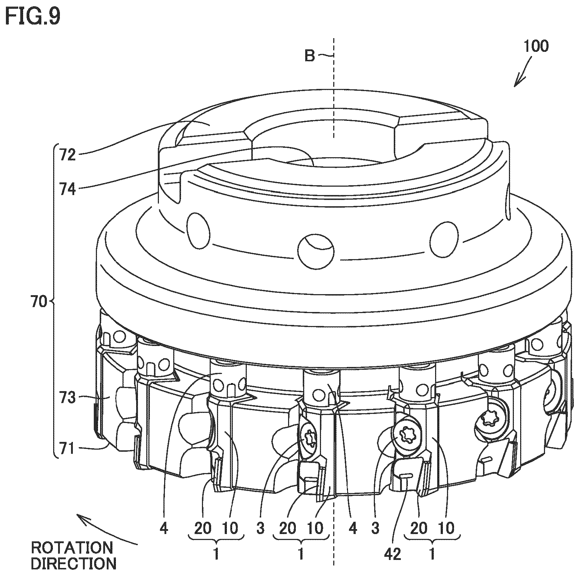

Base member 10 is provided with an attachment screw disposition hole 2. Attachment screw disposition hole 2 extends through base member 10. An attachment screw 3 is disposed in attachment screw disposition hole 2 (see Fig. 9). Attachment screw disposition hole 2 is opened in each of first side surface 11 and second side surface 12. In a direction parallel to first direction R1, attachment screw disposition hole 2 is located between second opening 42 and rear end surface 16. Cutting insert 1 is attached to main body portion 70 using attachment screw 3 (see Fig. 9).

Fourth side surface 14 is located opposite to third side surface 13. Cutting edge member 20 is disposed between third side surface 13 and fourth side surface 14 in a direction from third side surface 13 toward fourth side surface 14. In the direction parallel to first direction R1, each of third side surface 13 and fourth side surface 14 is located between front end surface 15 and rear end surface 16.

Fig. 3 is a schematic cross sectional view showing a configuration of cutting insert 1 according to the first embodiment. The cross section shown in Fig. 3 is parallel to first direction R1 and intersects each of the inlet and the outlet of flow path 50.

As shown in Fig. 3, flow path 50 has a first flow path portion 51 and a second flow path portion 52. First flow path portion 51 forms the inlet (first opening 41) of flow path 50. The fluid is accumulated in first flow path portion 51. Second flow path portion 52 forms the outlet (second opening 42) of flow path 50. Second flow path portion 52 is contiguous to first flow path portion 51. Second flow path portion 52 is located on the downstream side with respect to first flow path portion 51. The volume of first flow path portion 51 may be larger than the volume of second flow path portion 52.

A third opening 43 is provided in a side surface of first flow path portion 51. Third opening 43 is an inlet of second flow path portion 52. The fluid enters second flow path portion 52 through third opening 43. A direction in which the fluid enters first flow path portion 51 through first opening 41 is defined as a first flow direction A1. In the cross section parallel to first direction R1 and intersecting each of the inlet and the outlet of flow path 50, first flow direction A1 may be perpendicular to second direction R2 or may be inclined with respect to a straight line perpendicular to second direction R2, for example. A direction in which the fluid enters second flow path portion 52 through third opening 43 is defined as a second flow direction A2. Second flow direction A2 is substantially the same as second direction R2, for example. The cross section shown in Fig. 3 includes the center of second opening 42 and the center of third opening 43. It should be noted that in the specification of the present application, the center of an opening is defined as an intermediate position between two points at each of which a straight line in a direction in which the width of the opening is maximum when viewed in the flow direction of the fluid passing through the opening intersects the opening.

A direction in which the fluid flows out from second opening 42 and which is tangential to second opening 42 is defined as a third flow direction A3. A vector parallel to third flow direction A3 has a component of first direction R1. The component is positive. From another viewpoint, it can be said that an angle (hereinafter, also referred to as a first angle θ1) of more than 90° and 180° or less is formed by third flow direction A3 and second direction R2. First angle θ1 may be more than 100°, may be more than 110°, or may be more than 120°. First angle θ1 may be 170° or less, may be 160° or less, or may be 150° or less. The direction tangential to second opening 42 is measured in second flow path portion 52 at a position closest to second opening 42 except for a chamfered portion provided at second opening 42.

As shown in Figs. 1 and 3, second side surface 12 is provided with a protruding wall portion 19. Protruding wall portion 19 is contiguous to front end surface 15. Protruding wall portion 19 has a first region 31 and a second region 32. First region 31 extends along first direction R1. Second region 32 is contiguous to first region 31. Second region 32 is located in first direction R1 with respect to first region 31. Second region 32 is inclined with respect to first region 31. Second region 32 is located opposite to front end surface 15 with respect to first region 31. The outlet of flow path 50 is provided in second region 32.

Second side surface 12 has a third region 33 and a fourth region 34. Third region 33 is located in first direction R1 with respect to second region 32. Third region 33 is contiguous to second region 32 (see Fig. 1). Third region 33 is curved to be recessed. Fourth region 34 is located in first direction R1 with respect to third region 33. Fourth region 34 is contiguous to third region 33. Fourth region 34 extends along first direction R1. Attachment screw disposition hole 2 is opened in fourth region 34.

A chip from a workpiece cut by cutting edge 23 is moved from cutting edge 23 toward third region 33 and is curled and cut off in third region 33. The chip thus cut off is caused to flow away in third flow direction A3 by the fluid having exited second opening 42 of flow path 50. It should be noted that a part of the fluid having exited from second opening 42 of flow path 50 may hit third region 33.

Fig. 4 is a schematic front view showing a shape of the outlet of flow path 50. As shown in Fig. 4, second opening 42, which is the outlet of flow path 50, has an elongated shape. Specifically, when viewed in a front view of second opening 42, a width (first width W1) of the outlet in the direction perpendicular to rake face 21 may be larger than a width (second width W2) of the outlet in the direction parallel to rake face 21. It should be noted that the front view of second opening 42 is a field of view as viewed along a direction opposite to third flow direction A3. First width W1 may be 1.5 times or more as large as second width W2, or may be 2 times or more as large as second width W2. First width W1 may be 10 times or less as large as second width W2, or may be 5 times or less as large as second width W2.

### (Second Embodiment)

Next, a configuration of a cutting insert 1 according to a second embodiment will be described. Cutting insert 1 according to the second embodiment is different from cutting insert 1 according to the first embodiment mainly in that flow path 50 for the fluid does not have a flow path portion in which the fluid is accumulated, and the other configurations are substantially the same as those of cutting insert 1 according to the first embodiment. Hereinafter, the configuration different from that of cutting insert 1 according to the first embodiment will be mainly described.

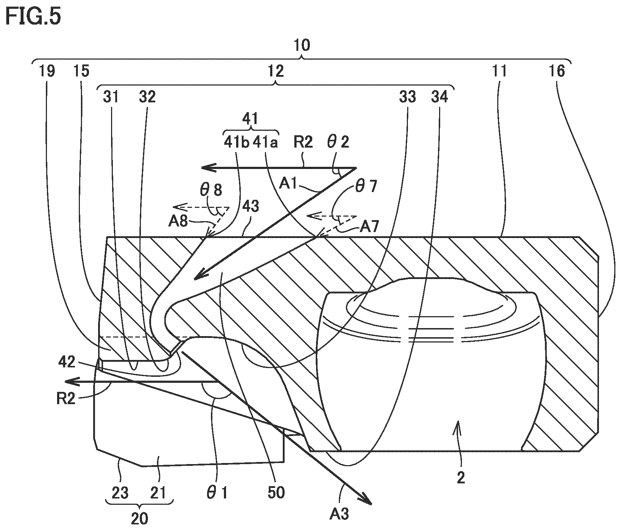

Fig. 5 is a schematic cross sectional view showing the configuration of cutting insert 1 according to the second embodiment. The cross sectional view shown in Fig. 5 corresponds to the cross sectional view shown in Fig. 3.

As shown in Fig. 5, fluid flow path 50 does not have a flow path portion in which the fluid is accumulated. The width of flow path 50 in second direction R2 may be decreased continuously. First opening 41 that forms the inlet of flow path 50 has a first opening end portion 41a and a second opening end portion 41b. In second direction R2, second opening end portion 41b is located between first opening end portion 41a and front end surface 15.

A direction in which the fluid flows into flow path 50 and which is tangential to flow path 50 at first opening end portion 41a is defined as a seventh tangential direction A7. An angle formed by second direction R2 and seventh tangential direction A7 is defined as a seventh angle θ7. A direction in which the fluid flows into flow path 50 and which is tangential to flow path 50 at second opening end portion 41b is defined as an eighth tangential direction A8. An angle formed by second direction R2 and eighth tangential direction A8 is defined as an eighth angle θ8. An angle formed by a direction in which the fluid flows into the inlet and which is tangential to the inlet of flow path 50 and second direction R2 is defined as a second angle θ2. Second angle θ2 is an average value of seventh angle θ7 and eighth angle θ8. The direction tangential to flow path 50 at first opening end portion 41a is measured in flow path 50 at a position closest to first opening end portion 41a except for a chamfered portion provided at first opening end portion 41a. Similarly, the direction tangential to flow path 50 at second opening end portion 41b is measured in flow path 50 at a position closest to second opening end portion 41b except for a chamfered portion provided at second opening end portion 41b.

As shown in Fig. 5, second angle θ2 is 0° or more and 90° or less. Second angle θ2 may be 10° or more or may be 20° or more. Second angle θ2 may be 80° or less or may be 70° or less.

### (Third Embodiment)

Next, a configuration of a cutting insert 1 according to a third embodiment will be described. Cutting insert 1 according to the third embodiment is different from cutting insert 1 according to the first embodiment mainly in that the number of the outlets of flow path 50 is two or more, and the other configurations are substantially the same as those of cutting insert 1 according to the first embodiment. Hereinafter, the configuration different from that of cutting insert 1 according to the first embodiment will be mainly described.

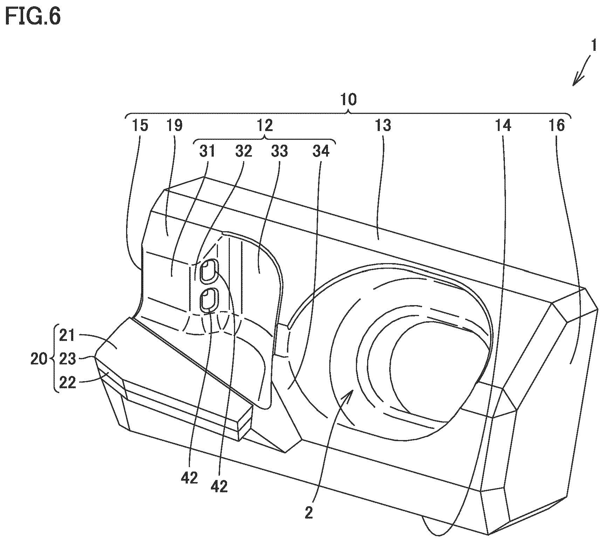

Fig. 6 is a schematic perspective view showing a configuration of a cutting insert 1 according to a third embodiment. As shown in Fig. 6, the number of the outlets (second openings 42) of flow path 50 may be two. From another viewpoint, it can be said that two second flow path portions 52 may be branched from first flow path portion 51. The outlets for the fluid may be disposed side by side along the direction perpendicular to rake face 21. The number of the outlets of flow path 50 is not limited to two. The number of the outlets of flow path 50 may be three or may be four or more.

### (Fourth Embodiment)

Next, a configuration of a cutting insert 1 according to a fourth embodiment will be described. Cutting insert 1 according to the fourth embodiment is different from cutting insert 1 according to the first embodiment mainly in that the number of the outlets of flow path 50 is two and orientations of the outlets are different, and the other configurations are substantially the same as those of cutting insert 1 according to the first embodiment. Hereinafter, the configuration different from that of cutting insert 1 according to the first embodiment will be mainly described.

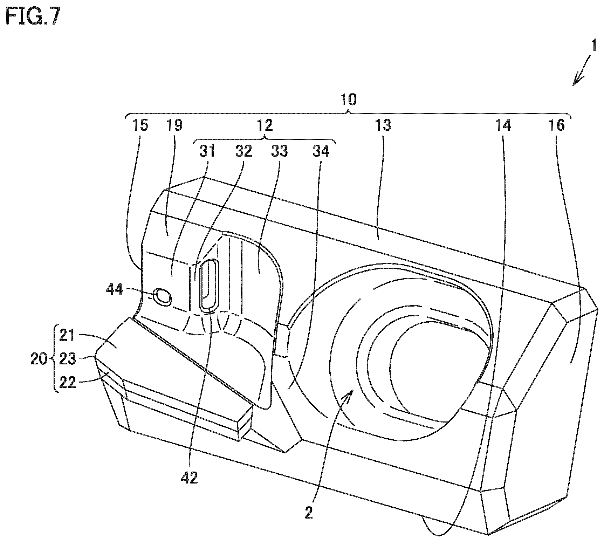

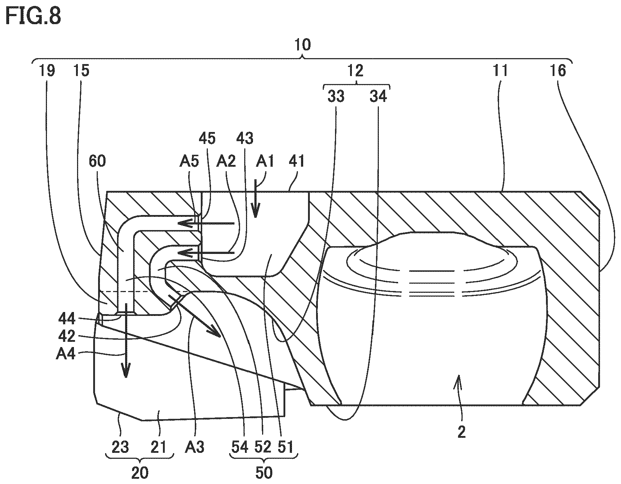

Fig. 7 is a schematic perspective view showing the configuration of cutting insert 1 according to the fourth embodiment. Fig. 8 is a schematic cross sectional view showing the configuration of cutting insert 1 according to the fourth embodiment. The cross sectional view shown in Fig. 8 corresponds to the cross sectional view shown in Fig. 3.

As shown in Figs. 7 and 8, flow path 50 has first flow path portion 51, second flow path portion 52, and a fourth flow path portion 54. First flow path portion 51 is provided with first opening 41. First opening 41 is the inlet of first flow path portion 51. Second flow path portion 52 is provided with second opening 42 and third opening 43. Second opening 42 is the outlet of second flow path portion 52. Second flow path portion 52 is contiguous to first flow path portion 51. Third opening 43 is the inlet of second flow path portion 52 and the outlet of first flow path portion 51.

Fourth flow path portion 54 is provided with a fourth opening 44 and a fifth opening 45. Fourth opening 44 is an outlet of fourth flow path portion 54. Fourth flow path portion 54 is contiguous to first flow path portion 51. Fifth opening 45 is an inlet of fourth flow path portion 54 and the outlet of first flow path portion 51. The fluid enters fourth flow path portion 54 through fifth opening 45. A direction in which the fluid enters fourth flow path portion 54 through fifth opening 45 is defined as a fifth flow direction A5. Fifth flow direction A5 is substantially the same as second direction R2, for example.

A direction in which the fluid flows out from fourth opening 44 and which is tangential to fourth opening 44 is defined as a fourth flow direction A4. Fourth flow direction A4 is different from third flow direction A3. When viewed in the direction perpendicular to rake face 21, fourth flow direction A4 may intersect cutting edge 23. Fourth flow direction A4 may be substantially the same as first flow direction A1. The direction tangential to fourth opening 44 is measured in fourth flow path portion 54 at a position closest to fourth opening 44 except for a chamfered portion provided at fourth opening 44.

As shown in Fig. 8, fourth opening 44 is provided in first region 31 of protruding wall portion 19. Second opening 42 is provided in second region 32 of protruding wall portion 19. In second direction R2, fourth opening 44 is located between front end surface 15 and second opening 42. Fifth opening 45 is located between third opening 43 and first side surface 11 in the direction from first side surface 11 toward second side surface 12.

Fig. 9 is a schematic perspective view showing a configuration of a rotary cutting tool according to the present embodiment. As shown in Fig. 9, the rotary cutting tool according to the present embodiment is, for example, a milling cutter. The rotary cutting tool is rotatable about an axis B. The rotary cutting tool mainly has a main body portion 70, cutting inserts 1, attachment screws 3, and position adjustment screws 4. Each of cutting inserts 1 is attached to main body portion 70.

Main body portion 70 has a first surface 71, a second surface 72, an outer peripheral surface 73, and an inner peripheral surface 74. First surface 71 is a surface to face a workpiece. Second surface 72 is located opposite to first surface 71. Second surface 72 faces a spindle of a machine tool. Outer peripheral surface 73 is contiguous to each of first surface 71 and second surface 72. In a direction along axis B, outer peripheral surface 73 is located between first surface 71 and second surface 72. The plurality of cutting inserts 1 are disposed at a boundary between first surface 71 and outer peripheral surface 73. The plurality of cutting inserts 1 are disposed at equal intervals along a rotation direction.

Each of cutting inserts 1 is attached to main body portion 70 using attachment screw 3. Position adjustment screw 4 adjusts the position of cutting insert 1 in the direction along axis B. In the direction along axis B, position adjustment screw 4 is located between cutting insert 1 and second surface 72. For each of the plurality of cutting inserts 1, a corresponding position adjustment screw 4 is provided.

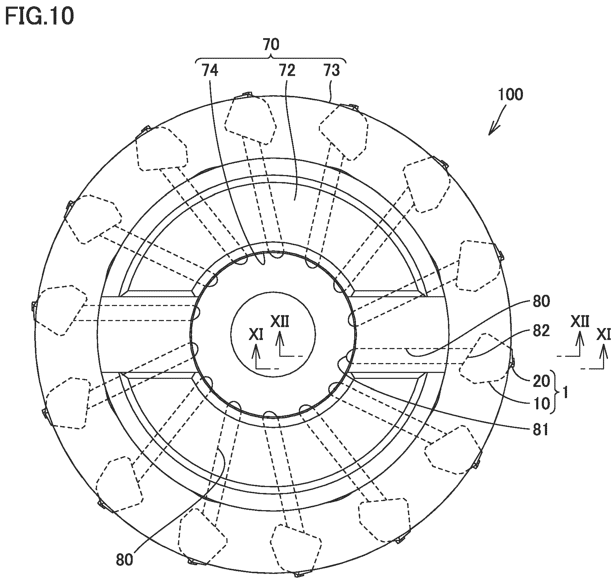

Fig. 10 is a schematic front view showing the configuration of the rotary cutting tool according to the present embodiment. As shown in Fig. 10, third flow path portions 80 are provided in main body portion 70. The fluid passes through each of third flow path portions 80. Third flow path portion 80 extends from inner peripheral surface 74 of main body portion 70 toward outer peripheral surface 73 thereof. Third flow path portion 80 has a main body inlet 81 and a main body outlet 82. Main body inlet 81 is opened in inner peripheral surface 74. Main body outlet 82 is located opposite to main body inlet 81. As shown in Fig. 10, third flow path portion 80 extends straightly when viewed along axis B. The plurality of third flow path portions 80 are provided to respectively correspond to the plurality of cutting inserts 1.

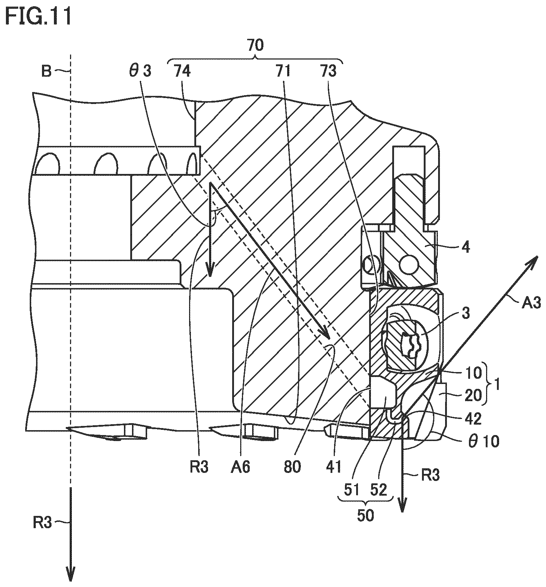

Fig. 11 is a schematic cross sectional view along a line XI-XI of Fig. 10. The schematic cross sectional view shown in Fig. 11 is parallel to axis B and intersects each of the outlet and the inlet of flow path 50 provided in cutting insert 1. The cross section shown in Fig. 11 includes the center of second opening 42 serving as the outlet of second flow path portion 52, and the center of third opening 43 serving as the inlet of second flow path portion 52.

Third flow direction A3 is a direction in which the fluid flows out from the outlet of cutting insert 1 and which is tangential to the outlet of flow path 50 of cutting insert 1. An axis frontward direction R3 is a direction parallel to axis B and extending from second surface 72 toward first surface 71. An angle (hereinafter, also referred to as a tenth angle θ10) formed by third flow direction A3 and axis frontward direction R3 is more than 90° and 180° or less.

Tenth angle θ10 is substantially the same as first angle θ1. Tenth angle θ10 may be more than 100°, may be more than 110°, or may be more than 120°. Tenth angle θ10 may be 170° or less, 160° or less, or 150° or less.

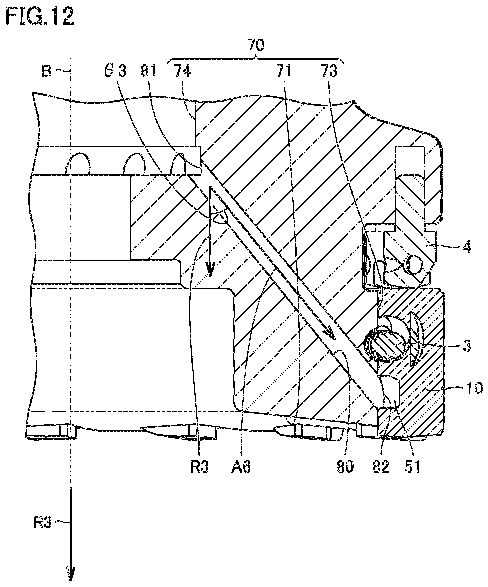

Fig. 12 is a schematic cross sectional view along a line XII-XII of Fig. 10. The schematic cross sectional view shown in Fig. 12 is parallel to axis B and intersects each of main body inlet 81 and main body outlet 82. The cross section shown in Fig. 12 includes the center of main body inlet 81 and the center of main body outlet 82.

In a state in which cutting insert 1 is attached to main body portion 70, main body outlet 82 of third flow path portion 80 is contiguous to flow path 50 of cutting insert 1. The fluid enters third flow path portion 80 from main body inlet 81 of third flow path portion 80 and flows toward main body outlet 82. The fluid having exited main body outlet 82 enters, from first opening 41 of cutting insert 1, first flow path portion 51 provided in cutting insert 1. The fluid having entered first flow path portion 51 passes through second flow path portion 52 and is discharged from second opening 42 to outside of cutting insert 1.

As shown in Fig. 12, in a cross section parallel to axis B and intersecting each of main body inlet 81 and main body outlet 82, a direction from main body inlet 81 toward main body outlet 82 is defined as a sixth flow direction A6. An angle (hereinafter, also referred to as a third angle θ3) formed by sixth flow direction A6 and axis frontward direction R3 is more than 0° and 90° or less. The center of main body inlet 81 is determined at a cross section closest to main body inlet 81 in a cross section in which the contour of third flow path portion 80 is continuous without interruption when third flow path portion 80 is imaginarily cut along a plane perpendicular to sixth flow direction A6. Similarly, the center of main body outlet 82 is determined at a cross section closest to main body outlet 82 in the cross section in which the contour of third flow path portion 80 is continuous without interruption when third flow path portion 80 is imaginarily cut along the plane perpendicular to sixth flow direction A6. It should be noted that in the specification of the present application, the center of the inlet or outlet is defined as an intermediate position between two points at each of which a straight line in a direction in which the width of the flow path portion in the cross section is maximum when viewed in a direction perpendicular to the cross section intersects the flow path portion.

Third angle θ3 may be more than 10°, may be more than 20°, or may be more than 30°. Third angle θ3 may be 80° or less, may be 70° or less, or may be 60° or less.

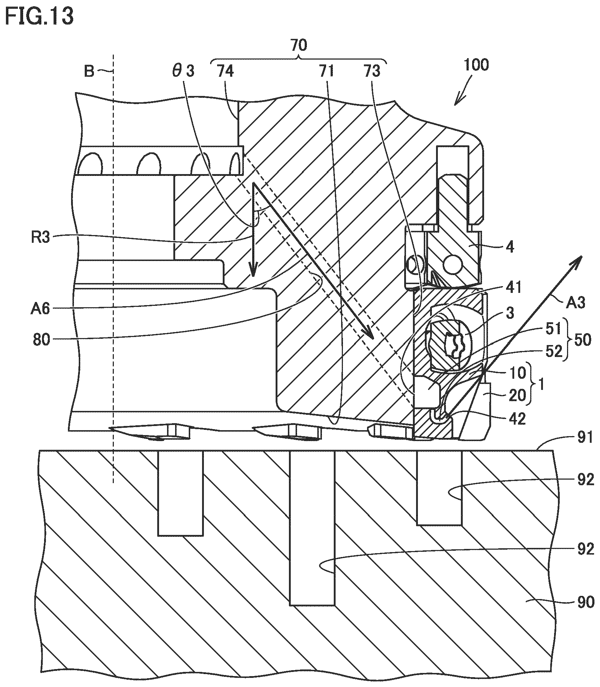

Fig. 13 is a schematic cross sectional view showing a state in which a workpiece is cut using the rotary cutting tool.

As shown in Fig. 13, rotary cutting tool 100 is disposed such that first surface 71 of rotary cutting tool 100 faces a workpiece 90. Workpiece 90 is, for example, an engine block. A plurality of recesses 92 are formed in a cutting-target surface 91 of the engine block.

When planar processing is performed onto workpiece 90 using rotary cutting tool 100, a coolant, which is the fluid, is introduced into third flow path portion 80 of main body portion 70. The coolant passes through third flow path portion 80 of main body portion 70, then enters flow path 50 of cutting insert 1, and is discharged to the outside of cutting insert 1 along third flow direction A3. A chip from workpiece 90 cut by cutting edge 23 is moved on rake face 21 and is curled and cut off in third region 33. The chip thus cut off is caused to flow away in third flow direction A3 by the coolant. A part of the coolant cools cutting edge 23.

It should be noted that it has been described above that rotary cutting tool 100 is a milling cutter, but rotary cutting tool 100 is not limited to the milling cutter. Rotary cutting tool 100 may be, for example, a reamer.

Next, functions and effects of cutting insert 1 and rotary cutting tool 100 according to the present embodiment will be described.

According to cutting insert 1 of the present embodiment, the vector parallel to the direction in which the fluid flows out from the outlet and which is tangential to the outlet of flow path 50 has the component of first direction R1 extending from front end surface 15 toward rear end surface 16, the component being positive. Thus, the fluid can be discharged rearward with respect to cutting edge 23. As a result, it is possible to reduce entry of a chip into recess 92 provided in workpiece 90.

In cutting insert 1 according to the present embodiment, flow path 50 may have first flow path portion 51 which forms the inlet and in which the fluid is accumulated, and second flow path portion 52 which forms the outlet and which is contiguous to first flow path portion 51. This leads to a reduced weight of cutting insert 1. As a result, rotary cutting tool 100 can be rotated at a high speed.

In cutting insert 1 according to the present embodiment, when viewed in the front view of the outlet, the width of the outlet in the direction perpendicular to rake face 21 may be larger than the width of the outlet in the direction parallel to rake face 21. Thus, a discharge amount of the fluid can be increased. As a result, it is possible to further reduce entry of a chip into recess 92 provided in workpiece 90.

In cutting insert 1 according to the present embodiment, in the cross section parallel to first direction R1 and intersecting each of the inlet and the outlet, the angle of 0° or more and 90° or less may be formed by the direction in which the fluid flows into the inlet and which is tangential to the inlet of flow path 50 and second direction R2 opposite to first direction R1, and the angle of more than 90° and 180° or less may be formed by the direction in which the fluid flows out from the outlet and which is tangential to the outlet of flow path 50 and second direction R2. Thus, the fluid can be discharged from the outlet of flow path 50 in a region close to cutting edge 23. As a result, it is possible to further reduce entry of a chip into recess 92 provided in workpiece 90.

In cutting insert 1 according to the present embodiment, second side surface 12 may be provided with protruding wall portion 19. The outlet may be opened in the side surface of protruding wall portion 19. Protruding wall portion 19 can prevent a chip from being moved frontward with respect to cutting edge 23. As a result, it is possible to further reduce entry of a chip into recess 92 provided in workpiece 90.

In rotary cutting tool 100 according to the present embodiment, in the cross section parallel to axis B and intersecting each of the inlet and the outlet, the angle of more than 90° and 180° or less is formed by the direction in which the fluid flows out from the outlet and which is tangential to the outlet of flow path 50 and axis frontward direction R3 parallel to axis B and extending from second surface 72 toward first surface 71. As a result, the fluid can be discharged in the direction opposite to the direction in which workpiece 90 exists. As a result, it is possible to reduce entry of a chip into recess 92 provided in workpiece 90.

In rotary cutting tool 100 according to the present embodiment, in the cross section parallel to axis B and intersecting each of main body inlet 81 and main body outlet 82, the angle of more than 0° and 90° or less may be formed by the direction from main body inlet 81 toward main body outlet 82 and axis frontward direction R3. Thus, the fluid can be effectively introduced, through third flow path portion 80 of main body portion 70, into flow path 50 of cutting insert 1 attached to the vicinity of the boundary between outer peripheral surface 73 and first surface 71 of main body portion 70.

The embodiments disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

1: cutting insert; 2: attachment screw disposition hole; 3: attachment screw; 4: position adjustment screw; 10: base member; 11: first side surface; 12: second side surface; 13: third side surface; 14: fourth side surface; 15: front end surface; 16: rear end surface; 19: protruding wall portion; 20: cutting edge member; 21: rake face; 22: flank face; 23: cutting edge; 31: first region; 32: second region; 33: third region; 34: fourth region; 41: first opening; 41a: first opening end portion; 41b: second opening end portion; 42: second opening; 43: third opening; 44: fourth opening; 45: fifth opening; 50: flow path; 51: first flow path portion; 52: second flow path portion; 54: fourth flow path portion; 70: main body portion; 71: first surface; 72: second surface; 73: outer peripheral surface; 74: inner peripheral surface; 80: third flow path portion; 81: main body inlet; 82: main body outlet; 90: workpiece; 91: cutting-target surface; 92: recess; 100: rotary cutting tool; A1: first flow direction; A2: second flow direction; A3: third flow direction; A4: fourth flow direction; A5: fifth flow direction; A6: sixth flow direction; A7: seventh tangential direction; A8: eighth tangential direction; B: axis; R1: first direction; R2: second direction; R3: axis frontward direction; W1: first width; W2: second width.

## Claims

1. A cutting insert for a rotary cutting tool, the cutting insert comprising:
a base member; and
a cutting edge member attached to the base member, wherein
the cutting edge member has a rake face and a flank face contiguous to the rake face,
a ridgeline between the rake face and the flank face forms a cutting edge,
the base member is provided with a flow path through which a fluid passes,
the base member has a front end surface on which the cutting edge member is disposed, a rear end surface located opposite to the front end surface, a first side surface located between the front end surface and the rear end surface and provided with an inlet of the flow path, and a second side surface located opposite to the first side surface and provided with an outlet of the flow path,
the rear end surface has a flat shape,
the first side surface has a flat shape,
an imaginary plane along the rear end surface and an imaginary plane along the first side surface are perpendicular to each other, and
a vector parallel to a direction in which the fluid flows out from the outlet and which is tangential to the outlet of the flow path has a component of a first direction perpendicular to the rear end surface and extending from the front end surface toward the rear end surface, the component being positive.

2. The cutting insert according to claim 1, wherein the flow path has a first flow path portion which forms the inlet and in which the fluid is accumulated, and a second flow path portion that forms the outlet and that is contiguous to the first flow path portion.

3. The cutting insert according to claim 1 or 2, wherein when viewed in a front view of the outlet, a width of the outlet in a direction perpendicular to the rake face is larger than a width of the outlet in a direction parallel to the rake face.

4. The cutting insert according to any one of claims 1 to 3, wherein
in a cross section parallel to the first direction and intersecting each of the inlet and the outlet,
an angle of 0° or more and 90° or less is formed by a direction in which the fluid flows into the inlet and which is tangential to the inlet of the flow path and a second direction opposite to the first direction, and
an angle of more than 90° and 180° or less is formed by a direction in which the fluid flows out from the outlet and which is tangential to the outlet of the flow path and the second direction.

5. The cutting insert according to claim 2, wherein
when viewed in a front view of the outlet, a width of the outlet in a direction perpendicular to the rake face is larger than a width of the outlet in a direction parallel to the rake face, and
in a cross section parallel to the first direction and intersecting each of the inlet and the outlet,
an angle of 0° or more and 90° or less is formed by a direction in which the fluid flows into the inlet and which is tangential to the inlet of the flow path and a second direction opposite to the first direction, and
an angle of more than 90° and 180° or less is formed by a direction in which the fluid flows out from the outlet and which is tangential to the outlet of the flow path and the second direction.

6. The cutting insert according to any one of claims 1 to 5, wherein
the second side surface is provided with a protruding wall portion, and
the outlet is opened in a side surface of the protruding wall portion.

7. The cutting insert according to any one of claims 1 to 6, wherein the number of the outlets is two or more.

8. A rotary cutting tool rotatable about an axis, the rotary cutting tool comprising:
a cutting insert; and
a main body portion to which the cutting insert is attached, wherein
the cutting insert includes
a base member, and
a cutting edge member attached to the base member,
the cutting edge member has a rake face and a flank face contiguous to the rake face,
a ridgeline between the rake face and the flank face forms a cutting edge,
the base member is provided with a flow path through which a fluid passes,
the base member has a front end surface on which the cutting edge member is disposed, a rear end surface located opposite to the front end surface, a first side surface located between the front end surface and the rear end surface and provided with an inlet of the flow path, and a second side surface located opposite to the first side surface and provided with an outlet of the flow path,
the main body portion has a first surface to face a workpiece and a second surface located opposite to the first surface,
in a cross section parallel to the axis and intersecting each of the inlet and the outlet, an angle of more than 90° and 180° or less is formed by a direction in which the fluid flows out from the outlet and which is tangential to the outlet of the flow path and an axis frontward direction parallel to the axis and extending from the second surface toward the first surface.

9. The rotary cutting tool according to claim 8, wherein
the main body portion is provided with a third flow path portion through which the fluid passes,
the third flow path portion has a main body outlet contiguous to the flow path and a main body inlet located opposite to the main body outlet, and
in a cross section parallel to the axis and intersecting each of the main body inlet and the main body outlet, an angle of more than 0° and 90° or less is formed by a direction from the main body inlet toward the main body outlet and the axis frontward direction.
